# EUROPÄISCHE PATENTANMELDUNG

(11) **EP 3 965 534 A1**
(43) Veröffentlichungstag der Anmeldung: **09.03.2022**
(21) Anmeldenummer: 21182318.2
(22) Anmeldetag: 29.06.2021
(51) Int. Cl.: H05B 47/175, H05B 47/18, H05B 47/19

(54) **ERWEITERUNGSMODUL ZUR FUNKTIONSERWEITERUNG EINES NETZWERKAUFBAUS**

(30) Priorität: 07.09.2020 DE 102020123334
(71) Anmelder: LEDVANCE GmbH, 85748 Garching (DE)
(72) Erfinder: KLIER, Philipp, 80804 München (DE); NIGGEBAUM, Alexander, 80805 München (DE); CHILACHAVA, David, 81543 München (DE)
(74) Vertreter: Lanchava, Bakuri

(57) **Zusammenfassung**

Ein Erweiterungsmodul zur Funktionserweiterung eines Netzwerkaufbaus wird bereitgestellt, wobei der Netzwerkaufbau (1) einen Kommunikationsbus (4) zum Bereitstellen einer Kommunikation zwischen einer Logikeinheit (3) eines Basismoduls (2) des Netzwerkaufbau (1) und einem oder mehreren Erweiterungsmodulen (5), insbesondere einem oder mehreren Funktionsgeräten und/oder Kommunikationsmodulen, aufweist, und wobei das Erweiterungsmodul (5) dazu ausgebildet ist, zur Funktionserweiterung bzw. Funktionsbereitstellung des Netzwerkaufbaus (1) mit dem Kommunikationsbus (4) des Netzwerkaufbaus (1) verbunden zu werden, um wenigstens eine Zusatzfunktion eines an dem Netzwerkaufbau (1) angeschlossenen elektrischen Verbrauchers bereitzustellen.

## Beschreibung

Die vorliegende Offenbarung betrifft im Allgemeinen Netzwerkaufbauten. Im Speziellen betrifft die vorliegende Offenbarung Erweiterungsmodule zur Funktionserweiterung eines Netzwerkaufbaus.

Elektronische Vorrichtungen, insbesondere Leuchtvorrichtungen bzw. Betriebsgeräte für Leuchten, werden immer komplexer und weisen eine zunehmende Anzahl von Funktionalitäten auf, welche in der Regel durch entsprechende Funktionseinheiten, wie etwa Sensorik, Kommunikationsschnittstellen, Fernsteuerungseinheit, intelligente Elektronik o.ä. realisiert werden. Es sind ferner netzwerkfähige elektronische Vorrichtungen bzw. Netzwerkgeräte bekannt, die sich in Gerätenetzwerken bzw. IoT (Internet of Things) beteiligen können, wie beispielsweise Leuchten bzw. Leuchtvorrichtungen, in einem Lichtmanagement-System oder LMS (Light Management System). Insbesondere kann das Anbinden einer Leuchte an ein IoT-Netzwerk bzw. LMS mittels zusätzlicher, netzwerkspezifischer Hardware- und Software-Einheiten realisiert werden, die grundsätzlich für jedes Netzwerk unterschiedlich sein können. Ferner werden elektronische Vorrichtungen bzw. Leuchten ständig um- bzw. hochgerüstet, um den Anforderungen an Funktionalität, Steuerbarkeit und Netzwerkfähigkeit gerecht zu werden. Die bereits vorhandenen Vorrichtungen bzw. Zusatzeinheiten können dabei nicht ohne weiteres für andere Netzwerke bzw. andere Zwecke verwendet werden, was zu hohen Kosten und hohen Umweltbelastungen führen kann.

Eine Aufgabe der Ausführungsformen der vorliegenden Offenbarung ist es, eine einfache und kostengünstige Möglichkeit der Funktionserweiterung für bestehende elektronische Vorrichtungen bzw. Leuchtvorrichtungen zu schaffen.

Zur Lösung dieser Aufgabe wird nach einem ersten Aspekt ein Erweiterungsmodul zur Funktionserweiterung eines Netzwerkaufbaus mit einem Kommunikationsbus bzw. Bussystem zum Bereitstellen einer Kommunikation zwischen einer Logikeinheit eines Basismoduls des Netzwerkaufbaus und einem oder mehreren Erweiterungsmodulen, insbesondere einem oder mehreren Funktionsgeräten und/oder Kommunikationsmodulen, vorgeschlagen.

Das Erweiterungsmodul ist dazu ausgebildet bzw. konfiguriert, zur Funktionserweiterung bzw. Funktionsbereitstellung des Netzwerkaufbaus mit dem Kommunikationsbus des Netzwerkaufbaus verbunden zu werden, um wenigstens eine Zusatzfunktion bzw. Zusatzfunktionalität eines an dem Netzwerkaufbau angeschlossenen elektrischen Verbrauchers, insbesondere einer Leuchtvorrichtung, bereitzustellen. Die Zusatzfunktionen können insbesondere zu Steuerungs- und/oder Netzwerkfunktionen des elektrischen Verbrauches umfassen. Insbesondere können die Zusatzfunktionen dazu diesen, dass der elektrische Verbraucher, insbesondere eine Leuchte, mit einem Gerätemanagementsystem bzw. LMS und/oder Sensoren gesteuert werden kann. Das Erweiterungsmodul kann dabei separat oder als Teil eines Funktionsgeräts, beispielsweise einer Leuchte, ausgebildet sein.

Das Erweiterungsmodul kann einen Leistungsteil zum Einbinden des Erweiterungsmoduls in den Stromversorgungskreislauf bzw. Stromnetzschaltkreis des wenigstens eines Verbrauchers und einen Steuerungsteil mit einer Steuereinheit zum Steuern des Leistungsteils umfassen. Insbesondere kann der Leistungsteil dazu ausgebildet sein, in den Stromnetzschaltkreis in Serie zu dem Verbraucher geschaltet zu werden, so dass die dem Verbraucher zur Verfügung gestellte elektrische Leistung durch die Steuerung des Leistungsteils auf einfache Weise gesteuert werden kann.

Der Leistungsteil kann insbesondere einen Leistungsschalter zum Ein- und Ausschalten des wenigstens einen Verbrauchers, insbesondere durch Schließen und Öffnen des Stromversorgungskreislaufs, umfassen. Mit dem Leistungsschalter kann somit der Stromkreislauf des wenigstens einen Verbrauchers bei Bedarf auf einfache Weise unterbrochen worden.

Der Steuerungsteil des Erweiterungsmoduls kann eine Steuerungsschnittstelle zum Anschließen des Steuerungsteils des Erweiterungsmoduls an den Kommunikationsbus bzw. ILB (Intra Luminaire Bus) umfassen. Die Steuerungsschnittstelle verleiht somit dem Steuerungsteil des Erweiterungsmoduls die Netzwerkfähigkeit, so dass das Erweiterungsmodul von einem Netzwerk insbesondere von einem LMS angesteuert werden kann.

In einigen Ausführungsformen umfasst das Erweiterungsmodul eine Messvorrichtung zum Erfassen wenigstens eines aktuellen Parameters, insbesondere elektrischen Parameters, des elektrischen Verbrauchers. Insbesondere kann die Messvorrichtung zur Erfassung von Leistungs- und/oder Diagnostikdaten für den wenigstens einen elektrischen Verbraucher ausgebildet sein. Der aktuelle Wert von Parametern sowie Leistungs- und Diagnostikdaten können beispielsweise zur Steuerung und/oder Diagnostik von Leuchten in einem LMS verwenden.

Die Messvorrichtung kann insbesondere einen Hall-Sensor und/oder eine Shunt zum Erfassen des wenigstens einen elektrischen Parameters aufweisen. Die Hall-Sensoren bzw. Shunts sind leicht verfügbar und eignen sich dafür, aktuelle elektrische Parameter von einem Stromkreis abzugreifen.

Die Zusatzfunktion kann insbesondere ein Ansteuern des wenigstens einen Verbrauchers, insbesondere einer Leuchte, umfassen. Durch das Anschließen des Erweiterungsmoduls an den Netzwerkaufbau kann somit die Funktionalität des elektrischen Verbrauchers nachträglich um die Steuerungsfunktion erweitert werden. Das Ansteuern kann insbesondere basierend auf dem erfassten Wert des wenigstens einen Parameters bzw. der Leistungs- und/oder Diagnostikdaten erfolgen, so dass beim Ansteuern des wenigstens einen Verbrauchers, bzw. der Leuchte dem aktuellen Betriebszustand des Verbrauchers Rechnung getragen wird.

In einigen Ausführungsformen ist das Erweiterungsmodul als Master-Modul zum Ansteuern von einem oder mehreren Slave-Modulen ausgebildet. Insbesondere kann das Erweiterungsmodul als zentraler Schalter für weitere Schalter bzw. "Slave"-Schalter fungieren, so dass ein LMS mit mehreren Schaltern, insbesondere für eine Vielzahl von Leuchten, auf einfache und kostengünstige Weise realisiert werden kann.

Das Basismodul kann eine Logik bzw. Logikeinheit umfassen, welche dazu konfiguriert ist, mit einem Kommunikationsbus, insbesondere mit einem internen Kommunikationsbus des Netzwerkaufbaus, zum Bereitstellen einer Kommunikation zwischen der Logikeinheit und einem oder mehreren Erweiterungsmodulen bzw. Peripherals, insbesondere einem oder mehreren Funktionsgeräten und/oder Kommunikationsmodulen, zur Funktionserweiterung bzw. Funktionsbereitstellung des Netzwerkaufbaus verbunden zu werden.

Der Kommunikationsbus kann insbesondere dazu ausgebildet sein, zwischen der Logikeinheit und den Erweiterungsmodulen Daten bzw. Signale zu übertragen. In einigen Ausführungsformen ist der Kommunikationsbus dazu ausgebildet, eine oder mehrere Erweiterungsmodule mit elektrischer Energie zu versorgen. Der Kommunikationsbus kann insbesondere Signalleitungen für eine serielle Kommunikation bzw. Übertragung von Botschaften und/oder Versorgungsleitungen zur Energieversorgung der Erweiterungsmodule bzw. Peripherals umfassen. In einigen Ausführungsformen ist der Kommunikationsbus als Teil des Basismoduls ausgebildet. Insbesondere kann der Kommunikationsbus dazu ausgebildet sein, mit einer Vielzahl von Funktionsgeräten und/oder Kommunikationsmodulen als Erweiterungsmodule verbunden zu werden, um erwünschte Funktionalitäten bereitzustellen.

Die Logikeinheit stellt insbesondere den zentralen Baustein bzw. Knoten dar, über welchen, insbesondere sämtliche, Netzwerkkommunikation erfolgen kann. Der Logik bzw. der Logikeinheit kommt somit in einem solchen modular aufgebauten Netzwerkaufbau die zentrale Rolle zu. Die Logikeinheit kann dabei Informationen gemäß der bestimmungsgemäßen Betriebsszenarien weiterleiten, verarbeiten und/oder verändern. Die Logikeinheit kann insbesondere einen Mikrocontroller mit einem Prozessor zur Datenverarbeitung, mit einer Speichereinheit zur Speicherung von Daten und maschinenlesbaren Codes für den Prozessor sowie mit einer Schnittstelle zum Anbinden der Logikeinheit an den Kommunikationsbus umfassen. Die Logikeinheit bzw. der Mikrocontroller können ferner eine oder mehrere weitere Schnittstellen insbesondere zum Konfigurieren von digitalen Ein- und Ausgängen und/oder zum Übersetzen von Messignalen umfassen. Das Konfigurieren der Logikeinheit zum Ausführen von bestimmten Aktionen bedeutet in diesem Zusammenhang, dass zur Ausführung dieser Aktionen in der Speichereinheit der Logikeinheit entsprechende maschinenlesbare Anweisungen für den Prozessor gespeichert werden.

Die Logikeinheit kann derart konfiguriert sein, dass die Kommunikation über den Kommunikationsbus zwischen der Logikeinheit und den Erweiterungsmodulen, insbesondere ausschließlich, über ein systeminternes bzw. proprietäres Kommunikationsprotokoll erfolgen kann. Das systeminterne Kommunikationsprotokoll kann insbesondere einen unbefugten Zugang zu dem Kommunikationsbus des Netzwerkaufbaus erschweren bzw. verhindern. Insbesondere kann die Verwendung des systeminternen bzw. proprietären Kommunikationsprotokolls das Anschließen nicht zugelassenen Erweiterungsmodulen an das Basismodul erschweren oder verhindern. Somit kann der Kommunikationsbus als eine geschützte, proprietäre Schnittstelle bzw. ILB (Intra Luminaire Bus) zum Austausch von Daten, bzw. Botschaften zwischen der Logikeinheit und den Erweiterungsmodulen bzw. Peripherals dienen.

Die Funktionsgeräte bzw. Peripherals können insbesondere Sensorik bzw. diverse Sensoren, Treiber, insbesondere LED-Treiber, Push-Buttons und/oder weitere Geräte umfassen. Im Falle einer Leuchte kann ein Funktionsgerät dazu ausgebildet sein, die Lichtmenge des durch die Leuchte erzeugten Lichtes zu erfassen bzw. zu steuern. Eine Leuchte kann insbesondere eine oder mehrere Lichtquellen aufweisen. Insbesondere kann eine Leuchte eine Lichtquelle zur Erzeugung eines indirekten Lichtes, wie etwa bei einer diffus leuchtenden Leuchtvorrichtung, und eine Lichtquelle zur Erzeugung eines direkten Lichts, wie bei einem Lichtstrahler, umfassen. Dabei kann die Steuerung der Lichtmenge unmittelbar über die Logikeinheit oder über das LMS erfolgen, in dem die Leuchte eingebunden ist. Die Funktionsgeräte können auch zur Datenerfassung und/oder -übertragung an das LMS dienen. Beispielsweise können die Funktionsgeräte CO₂- und/oder Temperatursensoren umfassen, die aktuelle CO₂-Konzentration bzw. den Temperaturwert erfassen bzw. überwachen, und die erfassten Daten, beispielsweise zum Zweck der Gebäudewartung bzw. Maintenance, liefern. Außerdem kann diese Information für die Optimierung des Energieverbrauchs bzw. zur Erhöhung der Effizienz von Betriebsabläufen verwendet werden.

Das eine oder die mehreren Kommunikationsmodule kann/können ein für die drahtlose Kommunikation ausgebildetes Modul umfassen. Das Erweiterungsmodul kann insbesondere eine ZigBee-, Bluetooth-, DALI-Schnittstelle umfassen. ZigBee ^{®} ist eine eingetragene Marke der ZigBee-Alliance. Bluetooth ^{®} ist eine eingetragene Marke der Bluetooth Special Interest Group. DALI ^{®} (Digital Addressable Lighting Interface) ist eine eingetragene Marke des internationalen Standardisierungskonsortiums für Licht und Gebäude-Automatisierungsnetzwerke. Durch die Verwendung von standardisierten Schnittstellen können an dem Kommunikationsmodul angeschlossenen Funktionsgeräte über Standardprotokolle ferngesteuert bzw. in ein LMS eingebunden werden. Das Kommunikationsmodul kann insbesondere dazu ausgebildet sein, als Dolmetscher zwischen der Logikeinheit und dem LMS zu fungieren, in dem es über ein Standardprotokoll mit dem LMS kommuniziert und über das interne bzw. proprietäres Protokoll des Kommunikationsbusses mit der Logikeinheit kommuniziert. Ein LMS ermöglicht den Kunden unterschiedliche Leuchten einzeln oder gruppiert zu steuern und von einfachen bis zu komplexen Lichtszenen zu definieren. Ein Erweiterungsmodul kann auch gleichzeitig ein Kommunikationsmodul und ein Funktionsgerät darstellen, beispielsweise ein ZigBee-Modul mit einem integrierten PIR-Sensor (Passive Infrared Sensor).

Aufgrund der Anbindbarkeit der Logikeinheit über den Kommunikationsbus mit einem oder mehreren Erweiterungsmodulen kann der Netzwerkaufbau um die Logikeinheit als Zentraleinheit bzw. "Core-Module" herum modular und flexibel auf- bzw. ausgebaut werden. Somit kann durch das Basismodul ein Intelligentes Leuchten-System realisiert werden, welches dem Kunden erlaubt, die Funktionalität, Komplexität und Kosten von Betriebsgeräten bzw. von Leuchten zu bestimmen und an den eigenen Bedarf anzupassen. Insbesondere stellt das Basismodul eine Design-Plattform dar, welche Funktionsgeräten einen freien und flexiblen Einsatz ggf. unter Einhaltung von etwaigen Normen, Standards und Anforderungen in gewünschtem Gerätenetzwerk bzw. Lichtmanagementsystem ermöglicht.

Die Logikeinheit kann dazu konfiguriert sein, über den Kommunikationsbus nach einem an dem Kommunikationsbus angeschlossenen Erweiterungsmodul zu suchen. Diese Suchfunktion ermöglicht der Logikeinheit festzustellen, ob ein bzw. ein weiteres Erweiterungsmodul an den Kommunikationsmodul angeschlossen wurde, um ggf. entsprechend darauf zu reagieren. Die Logikeinheit kann dazu konfiguriert sein, ein Erweiterungsmodul für den Kommunikationsbus zu konfigurieren, wenn das Suchen ergibt, dass das Erweiterungsmodul an dem Kommunikationsbus angeschlossen ist. Insbesondere kann die Logikeinheit ein an dem Kommunikationsbus angeschlossenes Kommunikationsmodul automatisch bestimmungsgemäß konfigurieren, so dass beispielsweise durch das Konfigurieren eines Kommunikationsmoduls der Netzwerkaufbau automatisch für ein LMS initialisiert wird.

In einigen Ausführungen weist die Logikeinheit eine weitere Schnittstelle, insbesondere eine Plug-&-Play-Schnittstelle, auf, zum Anschließen einer Plug-&-Play-Funktionseinheit bzw. eines Funktionsgeräts, die/das von der Logikeinheit über Steuersignale direkt ansteuerbar ist. Beispielsweise kann ein LED-Treiber ohne mikrocontrollerbasierte Eigenintelligenz an die Plug-&-Play-Schnittstelle angeschlossen und von der Logikeinheit direkt angesteuert werden. In einem solchen Fall können die im Werk eingestellten Variablen des LED-Treibers direkt in der Logikeinheit gespeichert werden. Intelligente LED-Treiber, die eigene Microcontroller besitzen, können an den Kommunikationsbus bzw. ILB-Schnittstelle angeschlossen werden.

Nach einem zweiten Aspekt wird ein Netzwerkaufbau bereitgestellt. Der Netzwerkaufbau umfasst ein Basismodul, ein Kommunikationsbus zum Bereitstellen einer Kommunikation zwischen einer Logikeinheit des Basismoduls und einem oder mehreren Erweiterungsmodulen, wobei der Netzwerkaufbau ferner ein an den Kommunikationsbus des Netzwerkaufbaus anschließbares Erweiterungsmodul nach dem ersten Aspekt umfasst. Mit dem anschließbaren Erweiterungsmodul können Zusatzfunktionen insbesondere zu Steuerungs- und/oder Netzwerkfunktionen des elektrischen Verbrauches bereitgestellt werden. Insbesondere können die Zusatzfunktionen dazu diesen, dass der elektrische Verbraucher, insbesondere eine Leuchte, mit einem Gerätemanagementsystem bzw. LMS und/oder Sensoren gesteuert werden kann. Das Erweiterungsmodul kann dabei separat oder als Teil eines Funktionsgeräts, beispielsweise einer Leuchte, ausgebildet sein.

Der Netzwerkaufbau kann insbesondere einen Treiber zum Antreiben eines elektrischen Verbrauchers umfassen, wobei das Erweiterungsmodul als Treibererweiterungsmodul zum Anschließen an den Treiber, insbesondere über den Kommunikationsmodul bzw. ILB ausgebildet ist. Elektronische Vorrichtungen, beispielsweise Leuchten, die einen Treiber benötigen, können mit dem an den Treiber anschließbaren Erweiterungsmodul auf einfache Weise nachgerüstet werden.

Die modulare Bauweise des Netzwerkaufbaus ermöglicht es, den Netzwerkaufbau mit Erweiterungsmodulen auf einfache Weise aus- bzw. nachzurüsten.

Der Netzwerkaufbau kann wenigstens eine Lichtquelle, insbesondere wenigstens eine LED-Lichtquelle, und wenigstens einen Treiber, insbesondere einen LED-Treiber, zum Antreiben der wenigstens einer Lichtquelle umfassen, wobei der wenigstens ein Treiber als ein an den Kommunikationsbus anschließbares Funktionsgerät ausgebildet sein kann. Insbesondere kann der Netzwerkaufbau als Leuchte ausgebildet sein. Eine solche Leuchte kann auf einfache Weise mit Zusatzfunktionen ausgestattet werden, indem an den Kommunikationsbus zusätzliche Erweiterungsmodule, wie zusätzliche Funktionsgeräte und/oder Kommunikationsmodule, angeschlossen werden.

In einigen Ausführungen umfasst der Netzwerkaufbau einen Plug-&-Play-LED-Treiber, der an der Plug-&-Play-Schnittstelle der Logikeinheit angeschlossen ist und direkt von der Logikeinheit angesteuert werden kann. Somit können einfache LED-Treiber, die nicht in der Lage sind, über den systeminternen Kommunikationsbus mit der Logikeinheit zu kommunizieren, unmittelbar durch die Plug-&-Play-Schnittstelle angesteuert werden.

Das wenigstens ein Erweiterungsmodul kann wenigstens ein Kommunikationsmodul zum Anbinden des Netzwerkaufbaus, insbesondere über ein standardisiertes Protokoll, an ein Netzwerksystem bzw. LMS umfassen. Insbesondere kann das wenigstens eine Kommunikationsmodul als ein Kommunikationsmodul zur drahtlosen Kommunikation mit einem Netzwerksystem bzw. LMS ausgebildet sein.

Nach einem dritten Aspekt wird eine Leuchte bereitgestellt. Die Leuchte, welche insbesondere als eine LED-Leuchte ausgebildet sein kann, umfasst ein Leuchtmittel, insbesondere ein LED-Leuchtmittel bzw. LED-Light-Engine, zum Erzeugen eines Lichts und einen Netzwerkaufbau mit einem Erweiterungsmodul nach dem ersten Aspekt, wobei das Erweiterungsmodul zum Bereitstellen einer Zusatzfunktionalität der Leuchte ausgebildet ist.

Insbesondere kann das Erweiterungsmodul eine Messvorrichtung zum Erfassen wenigstens eines aktuellen elektrischen Parameters der Leuchte umfassen. Insbesondere kann die Messvorrichtung zur Erfassung von Leistungs- und/oder Diagnostikdaten für den wenigstens einen elektrischen Verbraucher ausgebildet sein. Der aktuelle Wert von Parametern sowie Leistungs- und Diagnostikdaten können beispielsweise zur Steuerung und/oder Diagnostik von Leuchten in einem LMS verwenden. Die Diagnostikdaten können insbesondere zur Ferndiagnose der Leuchte bzw. des LMS benutzt werden.

Fenner wird ein Verfahren zum Konfigurieren eines Erweiterungsmoduls eines Netzwerkaufbaus bereitgestellt, wobei der Netzwerkaufbau ein Basismodul mit einer Logikeinheit und einen Kommunikationsbus, insbesondere einen systeminternen Kommunikationsbus, zum Bereitstellen einer Kommunikation, insbesondere Datenkommunikation, zwischen der Logikeinheit und einem oder mehreren Erweiterungsmodulen, insbesondere einen oder mehreren Funktionsgeräten und/oder Kommunikationsmodulen, zur Funktionserweiterung bzw. Funktionsbereitstellung des Netzwerkaufbaus umfasst. Das Verfahren umfasst ein Suchen, insbesondere durch die Logikeinheit, nach einem an dem Kommunikationsbus angeschlossenen Erweiterungsmodul. Diese Suchfunktion ermöglicht der Logikeinheit festzustellen, ob ein bzw. ein weiteres Erweiterungsmodul an den Kommunikationsmodul angeschlossen wurde, um ggf. entsprechend darauf zu reagieren. Das Verfahren umfasst ferner ein Konfigurieren eines Erweiterungsmoduls für den Kommunikationsbus, wenn das Suchen ergibt, dass das Erweiterungsmodul an den Kommunikationsbus angeschlossen worden ist. Somit kann die Logikeinheit einen an dem Kommunikationsbus angeschlossenen Erweiterungsmodul automatisch bestimmungsgemäß konfigurieren, so dass beispielsweise durch das Konfigurieren eines Erweiterungsmoduls der Netzwerkaufbau automatisch für ein LMS initialisiert werden kann.

Das Verfahren kann ein Abfragen umfassen, ob das beim Suchen gefundene Erweiterungsmodul ein Kommunikationsmodul ist, wobei das Erweiterungsmodul dazu bestimmt werden kann, ein in dem Netzwerkaufbau vorhandenes Funktionsgerät durch das Kommunikationsmodul in einem Netzwerk zu repräsentieren, wenn die Abfrage ergibt, dass das beim Suchen gefundene Erweiterungsmodul ein Kommunikationsmodul ist. Ein an dem Kommunikationsbus angeschlossenes Kommunikationsmodul kann somit ggf. zum Anschließen des Netzwerkaufbaus an dem Netzwerk, insbesondere LMS, automatisch konfiguriert werden.

Das Repräsentieren kann ein Benachrichtigen des Kommunikationsmoduls über den Typ des vorhandenen Funktionsgeräts umfassen. Somit kann ggf. die Information über den Typ des Funktionsgeräts über das Kommunikationsmodul an das Netzwerk, insbesondere LMS, automatisch weitergegeben werden.

Das Verfahren kann ferner ein Senden von netzwerkrelevanten bzw. -notwendigen Werkseinstellungen des Funktionsgeräts an das Kommunikationsmodul umfassen. Somit kann ggf. die Information über die Werkseinstellungen des Funktionsgeräts über das Kommunikationsmodul an das Netzwerk, insbesondere LMS, automatisch weitergegeben werden.

Der oben beschriebene Netzwerkaufbau erlaubt es, in den Fällen, wenn der Netzwerkaufbau ein als Leuchte ausgebildetes Erweiterungsmodul umfasst, die Leuchten nachträglich, insbesondere nach einem bestimmungsgemäßen Installieren, zu kalibrieren. Insbesondere können die Kalibrierdaten an einer Leuchte gleichen Typs erfasst und an den Netzwerkaufbau über ein als, insbesondere online-fähiges, Kommunikationsmodul ausgebildetes Erweiterungsmodul übertragen werden. Somit können solche Leuchten installations- und herstellerunabhängig nachträglich kalibriert werden.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch einen Netzwerkaufbau gemäß einem Ausführungsbeispiel,
- Fig. 2: zeigt schematisch einen Netzwerkaufbau gemäß einem weiteren Ausführungsbeispiel,
- Fig. 3: zeigt schematisch einen Netzwerkaufbau gemäß einem anderen Ausführungsbeispiel,
- Fig. 4: zeigt schematisch einen Netzwerkaufbau gemäß einem weiteren Ausführungsbeispiel,
- Fig. 5: zeigt schematisch einen Netzwerkaufbau gemäß einem anderen Ausführungsbeispiel,
- Fig. 6: zeigt ein Flussdiagramm eines Verfahrens zum Konfigurieren eines Erweiterungsmoduls gemäß einem Ausführungsbeispiel,
- Fig. 7: zeigt ein Flussdiagramm eines Verfahrens zum Kalibrieren einer Leuchte,
- Fig. 8: zeigt einen als Leuchte ausgebildeten Netzwerkaufbau gemäß einem Ausführungsbeispiel,
- Fig. 9: zeigt einen Netzwerkaufbau mit einem Treiber gemäß einem weiteren Ausführungsbeispiel,
- Fig. 10: zeigt ein schematisches Schaltbild eines Erweiterungsmoduls gemäß einem Ausführungsbeispiel, und
- Fig. 11: zeigt ein schematisches Schaltbild eines Anwendungsbeispiels des Erweiterungsmoduls gemäß Fig. 10.

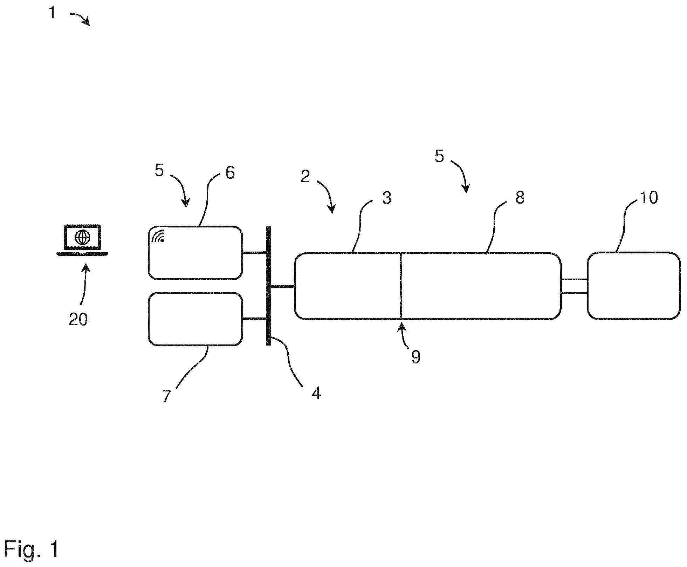

Fig. 1 zeigt schematisch einen Netzwerkaufbau bzw. Interconnect gemäß einem Ausführungsbeispiel. Der Netzwerkaufbau 1 umfasst ein Basismodul 2 mit einer Logikeinheit 3, einen Kommunikationsbus 4 sowie Erweiterungsmodule 5, welche sich in einer funktionellen Verbindung mit der Logikeinheit 3 befinden. In dem Ausführungsbeispiel der Fig. 1 sind es drei Erweiterungsmodule 5, die mit der Logikeinheit 3 verbunden sind. Ein Erweiterungsmodul 5 in Form eines Zigbee-Moduls 6 und ein Erweiterungsmodul 5 in Form eines Sensormoduls 7 sind über den Kommunikationsbus 4 mit der Logikeinheit 3 verbunden. Ein Erweiterungsmodul 5 in Form eines LED-Treibers 8 ist über eine Schnittstelle 9 mit der Logikeinheit 3 verbunden. Fig. 1 zeigt auch eine Lichtquelle 10, die mit dem LED-Treiber 8 elektrisch verbunden ist, und durch den LED-Treiber 8 angesteuert werden kann. Das Zigbee-Modul 6 ist dazu ausgebildet, mit einem LMS 20 (in Fig. 1 symbolisch dargestellt) verbunden zu werden.

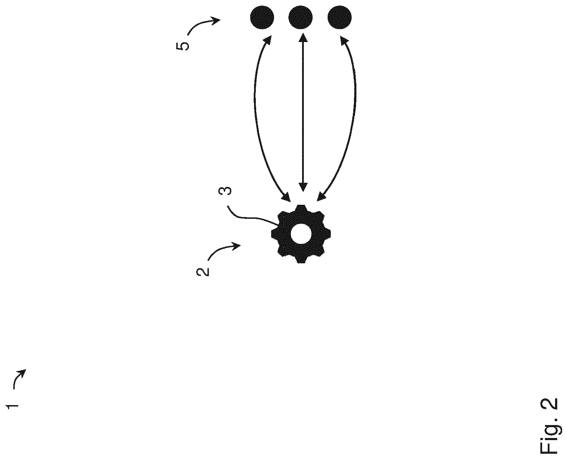

Fig. 2 zeigt schematisch einen Netzwerkaufbau gemäß einem weiteren Ausführungsbeispiel. Der Netzwerkaufbau 1 bzw. Interconnect der Fig. 2 umfasst ein Basismodul 2 mit einer Logikeinheit 3 sowie Erweiterungsmodule 5, welche sich in einer funktionellen Verbindung mit der Logikeinheit 3 befinden. Die funktionelle Verbindung zwischen der Logikeinheit 3 und den Erweiterungsmodulen 5 wird durch doppelseitige Pfeile schematisch dargestellt. Die Erweiterungsmodule 5 können sowohl Funktionsgeräte als auch Kommunikationsmodule sein. In diesem Ausführungsbeispiel stellt der Netzwerkaufbau 1 eine Standalone-Leuchte dar, wobei eines der Erweiterungsmodule 5 als LED-Treiber zur Lichtsteuerung der Leuchte ausgebildet ist.

Die Erweiterungsmodule 5 sind ähnlich wie in Fig. 1 über einen Kommunikationsbus bzw. ILB (in Fig. 2 nicht gezeigt) mit der Logikeinheit 3 verbunden. Die Logikeinheit 3 kann insbesondere derart konfiguriert sein, dass die funktionelle Verbindung bzw. Kommunikation über den Kommunikationsbus zwischen der Logikeinheit 3 und den Erweiterungsmodulen 5 über ein systeminternes bzw. proprietäres Kommunikationsprotokoll erfolgen kann. In einigen Ausführungsformen sind alle Erweiterungsmodule 5 ausschließlich über einen proprietären ILB mit der Logikeinheit 3 verbunden. In einigen Ausführungsformen weist die Logikeinheit 3 eine zusätzliche Schnittstelle, insbesondere eine Plug-&-Play-Schnittstelle, auf, an welcher insbesondere ein LED-Treiber direkt angeschlossen werden kann. Die Plug-&-Play-Schnittstelle kann als eine geschützte proprietäre Schnittstelle ausgebildet sein, so dass ein Einsatz von nicht zugelassenen bzw. nicht qualifizierten LED-Treibern oder anderer Erweiterungsmodule verhindert werden kann. Insbesondere kann die Logikeinheit 3 derart konfiguriert sein, dass ein LED-Treiber, welcher keine mikrocontrollerbasierte Eigenintelligenz aufweist, direkt an die Plug-&-Play-Schnittstelle angeschlossen werden kann. In einem solchen Fall können etwaige im Werk eingestellte Variablen des LED-Treibers direkt in der Logikeinheit gespeichert werden, so dass der LED-Treiber von der Logikeinheit 3 direkt angesteuert werden kann. Für die LED-Treiber bzw. für weitere Erweiterungsmodule 5, welche eigene Intelligenz bzw. eigenen Microcontroller besitzen, ist die Anbindung an der Logikeinheit 3 über den Kommunikationsbus 4 bzw. ILB möglich. Die Logikeinheit 3 kann dazu ausgebildet sein, über den ILB nach Erweiterungsmodule 5 bzw. nach Peripherals zu suchen, und in einem Standalone-Mode, insbesondere ohne Einbindung des Netzwerkaufbaus 1 in einem LMS, über den ILB Botschaften zu empfangen, bearbeiten und an Peripherals zu versenden.

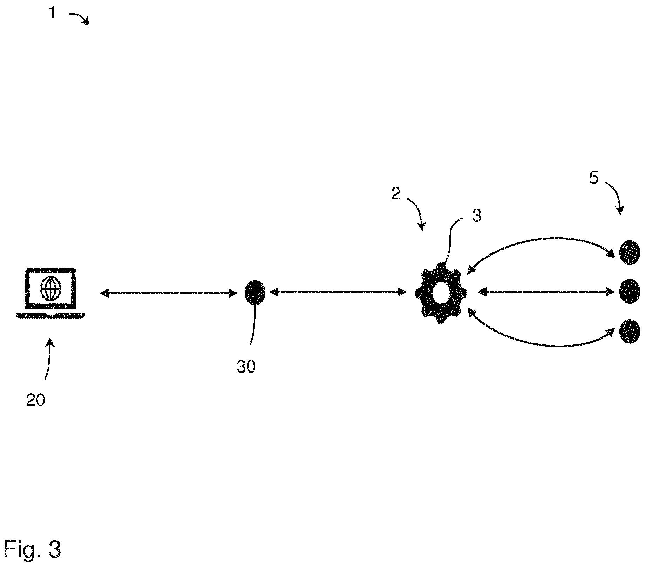

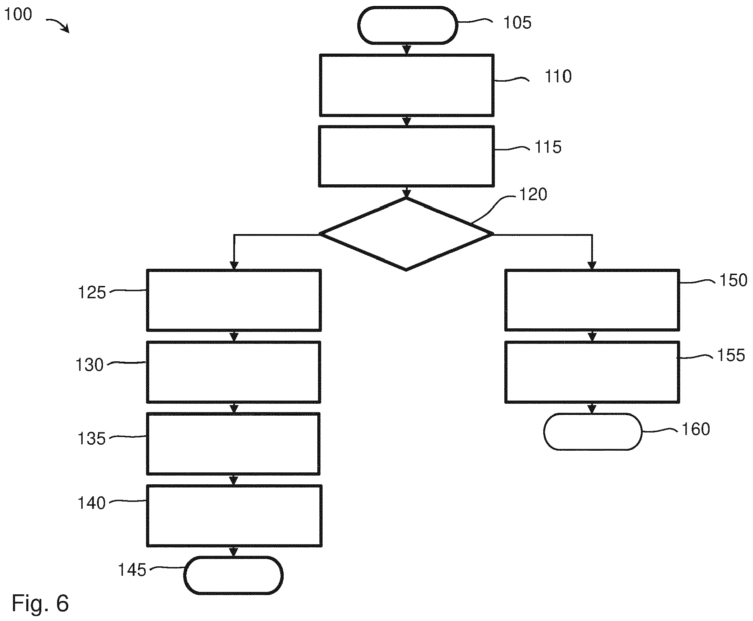

Fig. 3 zeigt schematisch einen Netzwerkaufbau gemäß einem anderen Ausführungsbeispiel. Der Netzwerkaufbau 1 der Fig. 3 entspricht im Wesentlichen dem Netzwerkaufbau 1 der Fig. 2 und weist zusätzlich ein Erweiterungsmodul in Form eines Kommunikationsmoduls 30 auf, über welches der Netzwerkaufbau 1 an einem LMS 20 (symbolisch dargestellt) angebunden werden kann. Die weiteren Erweiterungsmodule 5, die als Funktionsgeräte ausgebildet sind, sind über die Logikeinheit 3 mit dem Kommunikationsmodul 30 verbunden. Die Verbindung zwischen den Funktionsgeräten und dem Kommunikationsmodul 30 kann über die Logikeinheit 3 flexibel gestaltet werden. Insbesondere können die Funktionsgeräte dem Kommunikationsmodul 30 über die Logikeinheit 3 einzeln, gruppiert, oder gar nicht zugeordnet werden. Die Logikeinheit 3 kann insbesondere dazu konfiguriert sein, nach dem Detektieren eines an dem Kommunikationsbus 4 angebundenen Kommunikationsmoduls 30 dieses entsprechend zu konfigurieren und für die Teilnahme in einem entsprechenden LMS 20 zu initialisieren. Das Flussdiagramm der Fig. 6 unten zeigt den entsprechenden Prozessablauf.

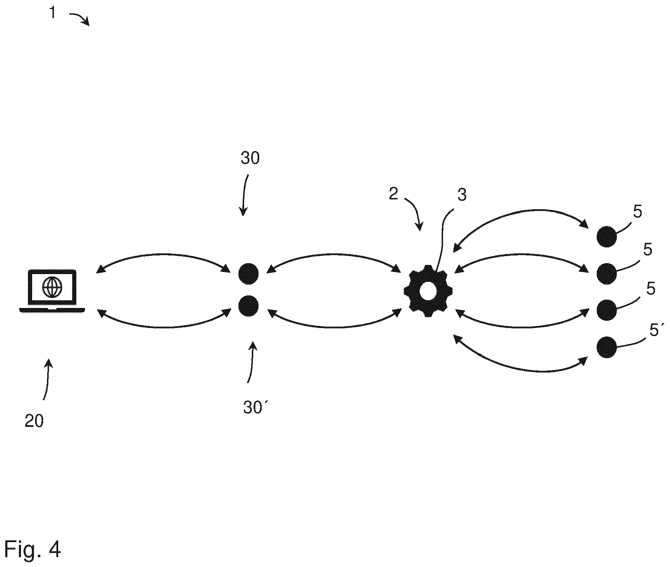

Fig. 4 zeigt schematisch einen Netzwerkaufbau gemäß einem weiteren Ausführungsbeispiel. Der Netzwerkaufbau 1 der Fig. 4 entspricht im Wesentlichen dem Netzwerkaufbau 1 der Fig. 3 und weist zusätzlich ein weiteres Kommunikationsmodul 30' auf. Somit weist der Netzwerkaufbau 1 der Fig. 4 neben einem ersten Kommunikationsmodul 30 ein zweites Kommunikationsmodul 30' auf, wobei der Netzwerkaufbau 1 über das erstes Kommunikationsmodul 30 und das zweite Kommunikationsmodul 30' an einem LMS 20 (symbolisch dargestellt) angebunden werden kann. Das in Fig. 4 gezeigt Ausführungsbeispiel entspricht insbesondere dem Fall, wenn die Anzahl der Funktionsgeräte das Limit eines Kommunikationsmoduls zum einwandfreien Betrieb in einem LMS erreicht, wonach ein weiteres Kommunikationsmodul gleichen Typs an der Logik angebracht wird. Die Logikeinheit 3 kann insbesondere dazu konfiguriert sein, über den Kommunikationsbus 4 bzw. ILB mit einer Vielzahl von Kommunikationsmodulen 30, 30' verbunden zu werden, so dass ein einwandfreier Betrieb von mehreren Funktionsgeräten in einem LMS gewährleistet werden kann. Die Logikeinheit 3 kann insbesondere konfiguriert sein, Funktionsgeräte den einzelnen Kommunikationsmodulen 30, 30' zuzuordnen, so dass der Netzwerkaufbau 1 durch Aufnahme weiterer Funktionsgeräte auf einfache Weise skaliert werden kann. Beispielsweise können einige Erweiterungsmodule 5 bzw. Funktionsgeräte dem ersten Kommunikationsmodul 30 und andere Erweiterungsmodule 5' bzw. Funktionsgeräte dem zweiten Kommunikationsmodul 30' zugeordnet werden.

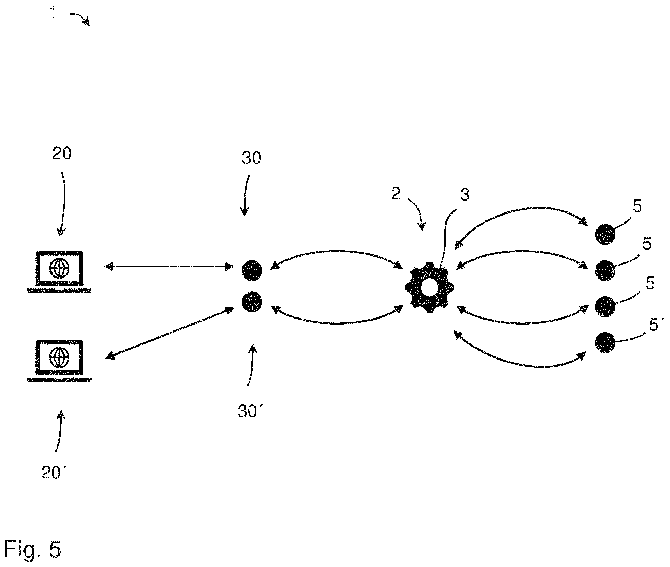

Fig. 5 zeigt schematisch einen Netzwerkaufbau gemäß einem anderen Ausführungsbeispiel. Der Netzwerkaufbau 1 der Fig. 5 entspricht im Wesentlichen dem Netzwerkaufbau 1 der Fig. 4. Dabei bezieht sich Fig. 5 auf einen Anwendungsfall, wenn dem Kunden eine Möglichkeit gegeben wird, die mit der Logikeinheit 3 verbundenen Erweiterungsmodule 5, 5' bzw. Funktionsgeräte alternativ oder gleichzeitig in zwei LMS 20, 20' darzustellen. Hierfür werden, gemäß dem gezeigten Ausführungsbeispiel, zwei unterschiedliche Kommunikationsmodule 30, 30' eingesetzt, die durch die Logikeinheit 3 konfiguriert werden können. Die Logikeinheit 3 wechselt in diesem Fall zu einem Multimaster-Mode-Betrieb, bedingt durch eine gleichzeitige Existenz von zwei unterschiedlichen LMS 20, 20'.

Die in Figuren 1, 3, 4 und 5 oben beschriebenen Netzwerkaufbauten können dazu ausgebildet sein, eine Leuchte für präzisere Farbsteuerung und optimierte Wartung nachträglich zu kalibrieren. Beispielsweise können die Messungen bei Leuchten mit zur Verfügung gestellten gleichem Leuchtentyp durchgeführt und die Kalibrierungsdaten für die bestehende Installation als ein Online-Update zur Verfügung gestellt werden. Für diese Option wird in dem Aufbau ein Erweiterungsmodul bzw. Peripheral angebracht, oder gegebenenfalls benutzt, welche eine "Online-Update" Fähigkeit (z.B. ZigBee-Peripheral) besitzt. Diese Kalibrierungsdaten können insbesondere Informationen über die wärmste und kälteste Farbtemperatur, den nominalen Lichtstrom und die Leistung der Leuchte, und/oder einem Colour Rendering Index (CRI) sowie Angaben über die Hersteller usw. beinhalten.

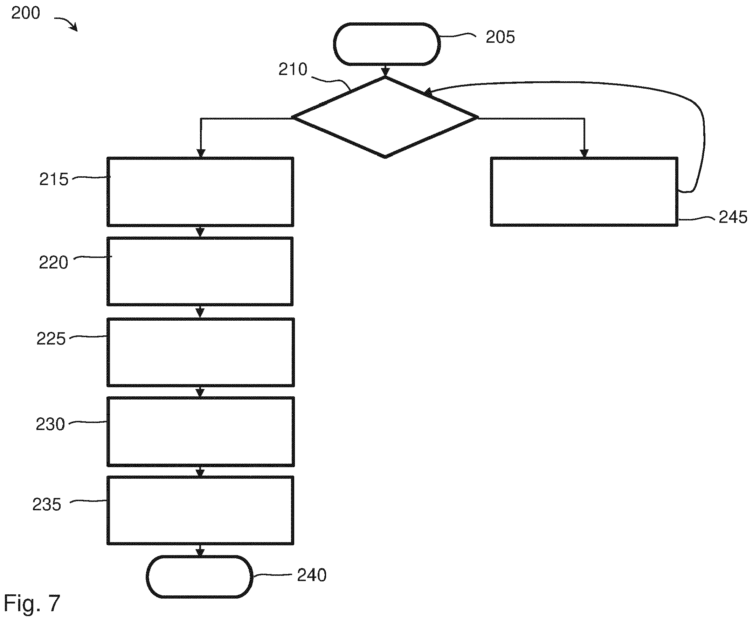

Ein Durchführungsbeispiel einer solchen nachträglichen Kalibrierung wird in Fig. 7 als Flussdiagramm dargestellt.

Fig. 6 zeigt ein Flussdiagramm eines Verfahrens zum Konfigurieren eines Erweiterungsmoduls gemäß einem Ausführungsbeispiel. Das in Fig. 6 gezeigte Verfahren 100 zum Konfigurieren eines Erweiterungsmoduls bzw. Peripherals kann insbesondere in einem der Netzwerkaufbauten gemäß Figuren 1, 3, 4, und 5 ausgeführt werden. Gemäß dem in Fig. 6 gezeigten Ausführungsbeispiel des Verfahrens 100 wird nach einem Start 105 des Verfahrens 100 in dem Verfahrensschritt 110 nach einem Peripheral bzw. einem an dem Basismodul 2, insbesondere über den Kommunikationsbus 4 bzw. ILB, angeschlossenen Erweiterungsmodul 5 gesucht. In dem darauffolgenden Schritt 115 wird das gefundene Peripheral bzw. Erweiterungsmodul 5 für den Kommunikationsbus bzw. ILB konfiguriert. Durch das Konfigurieren des Erweiterungsmoduls in dem Verfahrensschritt 115 wird das Erweiterungsmodul 5 bzw. Peripheral befähigt, an der Kommunikation über den Kommunikationsbus 4 teilzunehmen. In einem Abfrageschritt 120 wird abgefragt, ob das gefundene Erweiterungsmodul bzw. Peripheral ein Kommunikationsmodul ist.

Ergibt sich die Abfrage in dem Schritt 120, dass das gefundene Erweiterungsmodul 5 ein Kommunikationsmodul ist, so kann in dem Verfahrensschritt 125 das Kommunikationsmodul dazu bestimmt werden, ein in dem Netzwerkaufbau 1 bereits vorhandenes Funktionsgerät in einem LMS zu repräsentieren. In dem Verfahrensschritt 130 wird dann das Peripheral bzw. das Kommunikationsmodul 30 über den Typ des zu repräsentierenden Funktionsgeräts benachrichtigt. In dem Verfahrensschritt 135 werden dann die für die Teilnahme an dem LMS notwendigen Werksteinstellungen des Funktionsgeräts an das Kommunikationsmodul 30 gesendet. In dem Verfahrensschritt 140 wird das Peripheral bzw. das gefundene Kommunikationsmodul zur Teilnahme im LMS aktiviert. Daraufhin wird das Verfahren 100 zum Konfigurieren des Erweiterungsmoduls mit dem Verfahrensschritt 145 beendet.

Ergibt sich der Abfrageschritt 120, dass das Erweiterungsmodul kein Kommunikationsmodul ist, so wird das Erweiterungsmodul in dem Verfahrensschritt 150 als Funktionsgerät erkannt. In dem darauffolgenden Verfahrensschritt 155 wird das Funktionsgerät initialisiert und das Verfahren mit dem Verfahrensschritt 145 beendet.

Fig. 7 zeigt ein Flussdiagramm eines Verfahrens zum Kalibrieren einer Leuchte. Das in Fig. 7 gezeigte Verfahren 200 kann insbesondere zum Kalibrieren einer Leuchte durchgeführt werden, welche eine innere Architektur gemäß einem der in Figuren 1 bis 5 gezeigten Netzwerkaufbauten aufweist. Gemäß dem in Fig. 7 gezeigten Ausführungsbeispiel des Verfahrens 200 wird nach einem Start 205 des Verfahrens 200 ein Abfrage 210 durch die Logikeinheit 3 durchgeführt, ob eine Leuchte vorhanden bzw. an dem ILB angeschlossen ist. Ergibt sich die Abfrage 210, dass eine Leuchte vorhanden ist, so wird in dem Verfahrensschritt 215 eine Leuchte, insbesondere des gleichen Leuchtentyps, zur Kalibrierung durchgemessen. In dem Verfahrensschritt 220 werden Daten zur Kalibrierung erfasst und in dem Verfahrensschritt 225 werden die erfassten Daten zur Kalibrierung an ein online-fähiges Peripheral bzw. Kommunikationsmodul des Netzwerkaufbaus übertragen. In dem darauffolgenden Schritt 230 wird die Logikeinheit 3 über die erhaltenen Daten informiert und die Steuerung, insbesondere die Farbsteuerung der Leuchte, entsprechend angepasst. In dem Verfahrensschritt 235 werden die Leuchtendaten für das LMS zur Verfügung gestellt und mit dem Verfahrensschritt 240 wird das Verfahren beendet. Ergibt sich die Abfrage im Schritt 120, dass keine Leuchte, insbesondere keine Leuchte mit dem erforderlichen Leuchtentyp, vorhanden ist, so wird in dem Verfahrensschritt 245 eine Leuchte zum Durchmessen angefragt.

Diese Möglichkeit der Kalibrierung erlaubt den Kunden, den mit Inbetriebnahme eines LMS verbundenen logistischen Aufwand zu minimieren. Denn für gewöhnlich werden die Leuchten mit einem LED-Treiber im Werk einzeln kalibriert. Bei den hier beschriebenen Leuchten können die Leuchten flexibel, insbesondere bei gewünschten Herstellern, eingekauft und erst nachträglich, insbesondere gemäß dem oben beschriebenen Kalibrierverfahren, kalibriert werden.

Neben der Möglichkeit der nachträglichen werkunabhängigen Kalibrierung bieten die oben beschriebenen auf dem Plattformdesign basierten Netzwerkaufbauten eine Reihe von Vorteilen. Solche Netzwerkaufbauten bzw. Systeme können beispielsweise auf einfache Weise hochskaliert werden, indem weitere Erweiterungsmodule, insbesondere Funktionsgeräte und/oder Kommunikationsmodule, an den Kommunikationsbus bzw. ILB angeschlossen werden. Ferner können Funktionsgeräte flexibel, je nach Bedarf, in unterschiedlichen Netzwerken bzw. LMS oder in einer Standalone-Vorrichtung bzw. -Leuchte eingesetzt werden. Des Weiteren können unterschiedliche Funktionsgeräte, aufgrund der Flexibilität der Kommunikationsmodule, sowohl einzeln als auch gleichzeitig in ein LMS eingebunden werden. Die Modularität des Netzwerkaufbaus vereinfacht dabei den Wechsel von einem, beispielsweise veraltetem, LMS, zu einem anderen, insbesondere zukunftssicheren, LMS, ohne die bereits vorhandenen Funktionsgeräte verwerfen zu müssen. Neben unmittelbaren wirtschaftlichen Vorteilen kann dies speziell im Hinblick auf die "Circular Economy" bzw. Kreislaufwirtschaft und wegen immer strenger werdenden Umweltschutzregulierungen eine entscheidende Bedeutung sowohl für Leuchtenhersteller als auch für die Kunden haben. Durch die nachträgliche Kalibrierfähigkeit der Leuchten kann insbesondere eine präzise Lichtfarbensteuerung sowie eine hochqualitative Human Centric Lighting (HCL) realisiert werden, indem beispielsweis das Tageslicht besonders realitätsgetreu nachgeahmt wird.

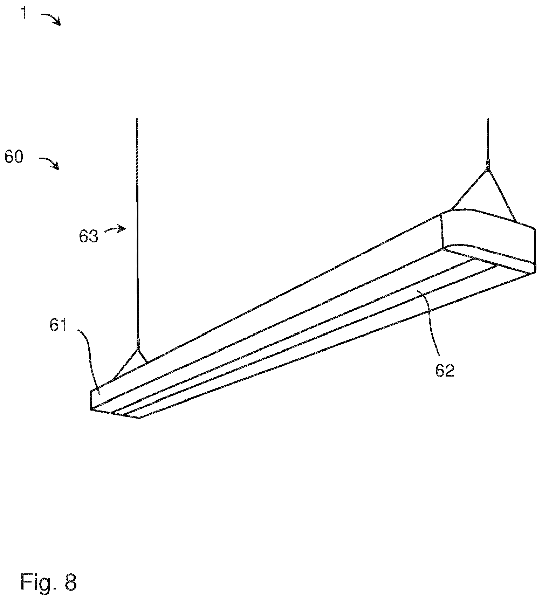

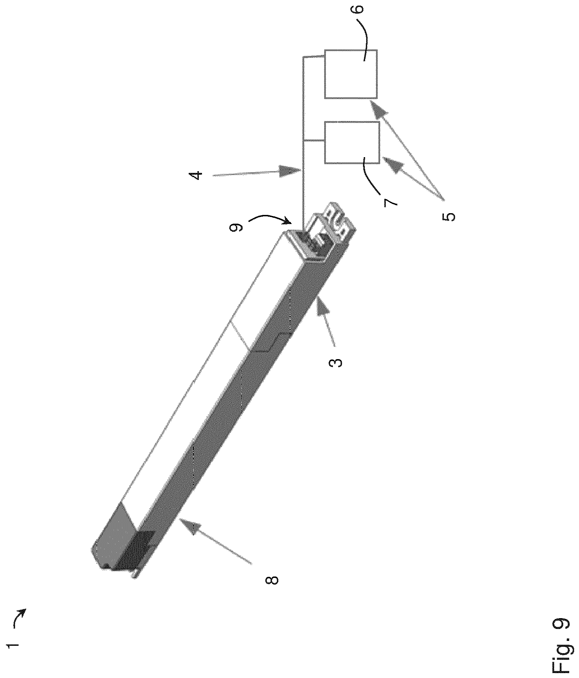

Fig. 8 zeigt einen als Leuchte ausgebildeten Netzwerkaufbau gemäß einem Ausführungsbeispiel. In dem Ausführungsbeispiel der Fig. 8 ist die Leuchte 60 beispielhaft als sogenannte LED-Pendelleuchte ausgebildet. Die Leuchte 60 umfasst ein LED-Leuchtmittel bzw. LED-Light-Engine (nicht gezeigt) zur Erzeugung eines LED-Lichtes, ein Gehäuse 61 mit einem Lichtaustrittsfenster 62 sowie eine Aufhängevorrichtung 63 zum Aufhängen der Leuchte 60 an der Decke. Die Leuchte 60 umfasst ferner einen Treiber 8 (nicht gezeigt) zum Antreiben der LED-Light-Engine bzw. des Leuchtmittels, einen Netzwerkaufbau 1 (nicht gezeigt) mit einem Kommunikationsbus 4 bzw. ILB gemäß einem der oben beschriebenen Aspekte. Der Netzwerkaufbau 1 wird bei der Leuchte 60 mittels eines in Form eines Interconnect-Moduls ausgebildeten Basismoduls 2 (nicht gezeigt) verwirklicht, das an dem Treiber 8 angeschlossen ist, wie unten in Fig. 9 verdeutlicht. Es versteht sich, dass Fig. 8 eine beispielhafte Ausführung einer Leuchte darstellt, und dass der hier beschriebene Netzwerkaufbau sich nicht auf einen speziellen elektrischen Verbraucher bzw. auf eine spezielle Leuchte beschränkt.

Fig. 9 zeigt einen Netzwerkaufbau mit einem Treiber gemäß einem weiteren Ausführungsbeispiel. In dem Ausführungsbeispiel der Fig. 9 ist der Treiber 8 zum Ansteuern einer Leuchte, beispielsweise der in Fig. 8 dargestellten Leuchte, ausgebildet.

An dem Treiber 8 ist ein Basismodul 2 bzw. Interconnect-Modul mit einem Kommunikationsbus 4 bzw. ILB angeschlossen. Das Basismodul 2 weist eine Schnittstelle 9 zum Anschließen von Erweiterungsmodulen 5 an das Basismodul auf. In Fig. 9 werden beispielhaft zwei Erweiterungsmodule 5 schematisch dargestellt, und zwar ein Zigbee-Modul 6 zum Bereitstellen einer drahtlosen Kommunikation über das Zigbee-Protokoll und ein Sensormodul 7 mit einem Bewegungsmelder zum Erfassen eines Bewegungssignals und zum Ansteuern der Leuchte auf der Basis der erfassten Bewegungssignals. Der Kommunikationsbus 4 bzw. die Schnittstelle 9 ist allerdings dazu ausgelegt, auch mit mehr als zwei insbesondere mit einer Vielzahl von Erweiterungsmodulen verbunden zu werden. Insbesondere aufgrund der Ausbaubarkeit der Leuchte 60 durch Anbindung weiterer Teilnehmer bzw. Connectivity Peripherals oder Erweiterungsmodule an den Kommunikationsmodul 4 bzw. ILB ist eine solche "Interconnect-Leuchte" in der Lage, mit einem LMS zu kommunizieren oder anhand von busfähigen Sensoren bzw. Sensor-Peripherals durch diese gesteuert zu werden.

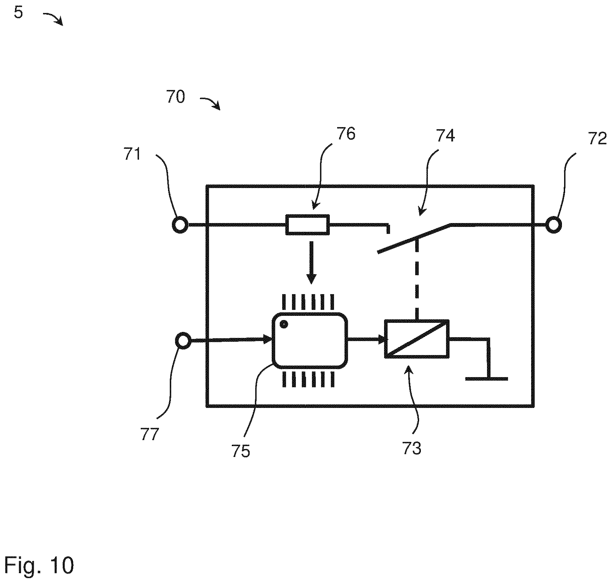

Fig. 10 zeigt ein schematisches Schaltbild eines Erweiterungsmoduls gemäß einem Ausführungsbeispiel. Das Erweiterungsmodul 5 ist in diesem Ausführungsbeispiel in Form einer Schaltungsvorrichtung 70 ausgebildet. Die Schaltvorrichtung kann insbesondere als ein Erweiterungsmodul 5 oder Teil eines Erweiterungsmoduls 5 zum Anschließen an den Kommunikationsbus 4 eines Netzwerkaufbau 1 ausgebildet sein. Die Schaltungsvorrichtung 70 umfasst einen Eingang 71, insbesondere einen Leistungseingang, mit einer Eingangsklemme und einen Ausgang 72, insbesondere einen Leistungsausgang, mit einer Ausgangsklemme, wobei der Eingang 71 und der Ausgang 72 über einen steuerbaren Schalterkontakt, insbesondere einen durch einen Schaltertreiber 73 antreibbaren Schalter 74 bzw. Leistungsschalter miteinander verbunden sind. Als Schalter 74 kann ein Relais- und/oder ein Halbleiter-Schalter verwendet werden. Die Schaltungsvorrichtung 70 weist eine Steuereinheit 75, eine Messvorrichtung 76 bzw. Sensorik sowie einen Steuereingang 77 bzw. Steuerungsschnittstelle auf.

Die Messvorrichtung 76 ist mit dem Eingang 71 elektrisch verbunden und dazu ausgebildet, einen aktuellen Eingangsparameter, insbesondere einen Ausgangsstrom, eine Eingangsspannung und/oder Eingangsleistung, zu erfassen und ein dem erfassten Eingangsparameter entsprechendes Messsignal an die Steuereinheit 75 zu senden. Die Steuereinheit 75 kann dazu ausgebildet sein, dass durch die Messvorrichtung 76 generierte Messsignal zu erfassen und den Schaltertreiber 73 zum Ein- bzw. Ausschalten des Schalters 74 auf der Basis des erfassten Messignals anzusteuern. Der Steuereingang 77 ist konfiguriert, an dem Kommunikationsbus 4 bzw. an das Bussystem oder ILB des Netzwerkaufbau 1 angeschlossen zu werden. Die Messvorrichtung 76 kann insbesondere eine leistungsmessende Einheit, insbesondere mit eine Hallsensor und/oder Shunt, aufweisen und dazu ausgebildet sein, die Leistungsaufnahme der angeschlossenen Verbraucher, insbesondere Leuchten, zu messen. Die Ergebnisse dieser Leistungsmessung können über den Kommunikationsbus 4 an ein LMS übertragen werden. Die Schaltungsvorrichtung 70 kann als eine externe und/oder als in einer Leuchte integrierte Komponente ausgebildet sen.

Mit der Messvorrichtung 76 können insbesondere Leistungsdaten auszulesen erden, und mit dem Schalter 74 kann die Leuchte basierend auf den mit der erfassten Leistungsdaten gesteuert insbesondere ferngesteuert werden. Die Schaltungsvorrichtung 70 stellt eine sogenannte Master-/Slave-Schaltbox dar und kann zum netzseitigen Ein- und Ausschalten eines externen Teilnehmers, insbesondere einer Leuchte, eingesetzt werden. Insbesondere kann die Schaltungsvorrichtung 70 als zentraler Schalter für weitere Schalter bzw. "Slave" Schalter fungieren, so dass ein LMS mit mehreren Schaltern auf einfache und kostengünstige Weise realisiert werden kann.

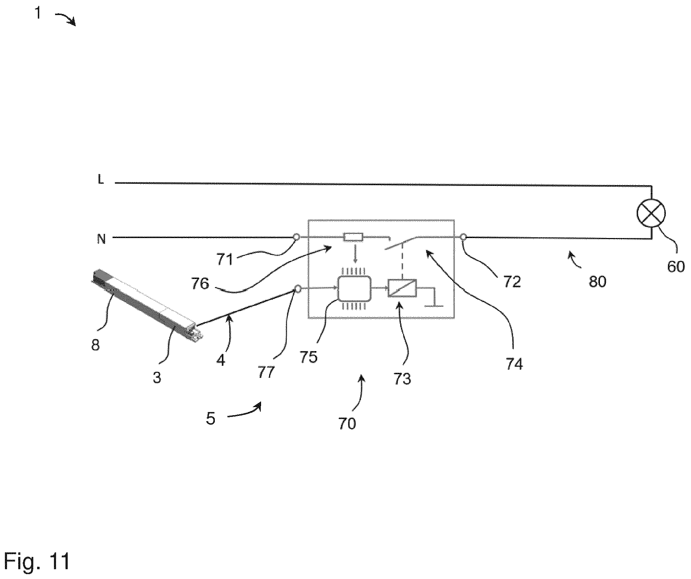

Fig. 11 zeigt ein schematisches Schaltbild eines Anwendungsbeispiels des Erweiterungsmoduls gemäß Fig. 10. In dem in Fig. 11 gezeigten Anwendungsbeispiel wird die Schaltungsvorrichtung 70 bzw. die Master/Slave-Box zur Steuerung einer Leuchte 60 eingesetzt. Fig. 11 zeigt auch einen Stromnetzschaltkreis mit Stromnetzleitungen L und N zur Stromversorgung der Leuchte 60. Die Schaltungsvorrichtung 70 gemäß Fig. 10 ist mit dem Eingang 71 und mit dem Ausgang 72 an dem Stromnetzschaltkreis 80 angeschlossen. Die Schaltungsvorrichtung 70 ist dabei in Serie zu der Leuchte 60 derart geschaltet, dass zur Versorgung der Leuchte 60 mit elektrischer Energie der elektrische Strom durch den Schalter 74 des Schaltungsvorrichtung 70 fließen muss. Somit übernimmt die Schaltungsvorrichtung 70 die Aufgabe eines, insbesondere konventionellen, Schalters, der die Leuchten durch Unterbrechen bzw. das Herstellen der Stromversorgung aus- und einschaltet. Fig. 11 zeigt auch einen Treiber 8 sowie ein an dem Treiber 8 angeschlossenes Basismodul 2 bzw. Interconnect-Modul gemäß Fig. 9, wobei die Schnittstelle 9 des Basismoduls 2 über den Kommunikationsbus 4 bzw. ILB mit dem Steuereingang 77 der Schaltungsvorrichtung 70 elektrisch verbunden ist. Die Kommunikation mit einem LMS 20 oder das Einbinden von Sensoren bzw. weiterer Erweiterungsmodule kann über den dargestellten Kommunikationsbus 4 erfolgen, der auch die Integration von Sensoren- ZigBee- oder DALI- Komponenten ermöglicht. Fig. 11 verdeutlicht, dass die Schaltungsvorrichtung 70 grundsätzlich zur Steuerung jeder Art von elektrischen Verbrauchern bzw. Leuchten, insbesondere von konventionellen Leuchten, eingesetzt werden kann. Der Leistungsteil, insbesondere der Schalter 74 sowie der Eingang 71 bzw. Eingangsklemme und der Ausgang 72 bzw. Ausgangsklemme, der Schaltvorrichtung 70 kann insbesondere anwendungsspezifisch konfiguriert bzw. dimensioniert sein, so dass die Schaltungsvorrichtung 70 den zu erwartenden maximalen Strömen standhalten kann. Die Steuerung des Leistungsschalters kann, wie oben beschrieben, über das Bussystem bzw. ILB erfolgen, so dass der Schalters 74 bzw. Schaltkontakte des Schalters 74 durch ein LMS, insbesondere unter Verwendung von Connectivity-Peripherals, oder auch durch Sensoren, insbesondere unter Verwendung von Sensor-Peripherals, gesteuert werden kann.

Die Stromversorgung für die Versorgung des Bussystems bzw. ILB kann durch die "Interconnect-Leuchte" kontinuierlich bzw. ununterbrochen erfolgen. Auf diese Weise wird eine maximale Verfügbarkeit des Systems bzw. der Funktionalität des Schaltungsvorrichtung 70 sichergestellt. Durch Einsatz von solchen Erweiterungsmodulen kann der Arbeits- und Kostenaufwand im Falle eines Umstieges von konventionellen Beleuchtungslösungen, bei welchen insbesondere mehrere Leuchten mit einem Schalter direkt bzw. netzseitig ein- und ausgeschaltet werden, hin zu LMS-basierten Beleuchtungslösungen reduziert werden. Zudem bieten LMS verschiedene Funktionen zur Automatisierung und Fernwartung etc. von Beleuchtungslösungen an. Auch die oben beschriebenen Funktionen der Lichtfernsteuerung (an/aus) und/oder der Messung der Leistungsaufnahme können mit Hilfe eines LMS realisiert werden. Sollen beispielweise Gebäude mit konventionellen Beleuchtungssystemen auf Beleuchtungssysteme umgerüstet werden, die auf einem Lichtmanagement System basieren, so ist dies mit aufwendigen Änderungen verbunden. Diese Änderungen können insbesondere das Austauschen einzelner Komponenten (z.B. Treiber) und/oder - für gewöhnlich - das Austauschen kompletter Leuchten umfassen.

Auch im Falle einer Neuinstallation eines LMS (z.B. in einem Neubau) fällt ein Mehraufwand an, da auch hier die Verwendung intelligenter Leuchten bzw. Treibern benötigt wird. Folglich sind LMS bzw. für LMS konfigurierte Leuchten gegenüber konventionellen Beleuchtungslösungen immer mit höheren Kosten verbunden sind. Die hier beschriebenen Prinzipien ermöglichen das Aufrüsten von konventionellen Lichtinstallationen, so dass sie durch ein Lichtmanagementsystem betrieben werden können. Überdies hinaus können die hier beschriebenen Prinzipien auch für Neuinstallationen als preisgünstigere Alternative zu vollumfänglichen LMS genutzt werden. Dabei können insbesondere solche Funktion, wie Fernsteuerung durch LMS oder Sensoren, Reporting des Energieverbrauchs, und rudimentäre Diagnosefunktionen realisiert werden.

Obwohl zumindest eine beispielhafte Ausführungsform in der vorhergehenden Beschreibung gezeigt wurde, können verschiedene Änderungen und Modifikationen vorgenommen werden. Die genannten Ausführungsformen sind lediglich Beispiele und nicht dazu vorgesehen, den Gültigkeitsbereich, die Anwendbarkeit oder die Konfiguration der vorliegenden Offenbarung in irgendeiner Weise zu beschränken. Vielmehr stellt die vorhergehende Beschreibung dem Fachmann einen Plan zur Umsetzung zumindest einer beispielhaften Ausführungsform zur Verfügung, wobei zahlreiche Änderungen in der Funktion und der Anordnung von in einer beispielhaften Ausführungsform beschriebenen Elementen gemacht werden können, ohne den Schutzbereich der angefügten Ansprüche und ihrer rechtlichen Äquivalente zu verlassen. Außerdem können nach den hier beschriebenen Prinzipien auch mehrere Module bzw. mehrere Produkte miteinander verbunden werden, um weitere Funktionen zu erhalten.

### Bezugszeichenliste

- 1: Netzwerkaufbau
- 2: Basismodul
- 3: Logikeinheit
- 4: Kommunikationsbus
- 5, 5': Erweiterungsmodul
- 6: Zigbee-Modul
- 7: Sensormodul
- 8: LED-Treiber
- 9: Schnittstelle
- 10: Lichtquelle

- 20, 20': LMS

- 30, 30': Kommunikationsmodul

- 60: Leuchte
- 61: Gehäuse
- 62: Lichtaustrittsfenster
- 63: Aufhängevorrichtung

- 70: Schaltungsvorrichtung
- 71: Eingang
- 72: Ausgang
- 73: Schaltertreiber
- 74: Schalter
- 75: Steuereinheit
- 76: Messvorrichtung
- 77: Steuereingang

- 80: Stromnetzschaltkreis
- 100: Verfahren zum Konfigurieren eines Erweiterungsmoduls
- 105: Verfahrensschritt
- 110: Verfahrensschritt
- 115: Verfahrensschritt
- 120: Verfahrensschritt
- 125: Verfahrensschritt
- 130: Verfahrensschritt
- 135: Verfahrensschritt
- 140: Verfahrensschritt
- 145: Verfahrensschritt
- 150: Verfahrensschritt
- 155: Verfahrensschritt
- 160: Verfahrensschritt

- 200: Verfahren zum Kalibrieren einer Leuchte
- 205: Verfahrensschritt
- 210: Verfahrensschritt
- 215: Verfahrensschritt
- 220: Verfahrensschritt
- 225: Verfahrensschritt
- 230: Verfahrensschritt
- 235: Verfahrensschritt
- 240: Verfahrensschritt
- 245: Verfahrensschritt

## Patentansprüche

1. Erweiterungsmodul zur Funktionserweiterung eines Netzwerkaufbaus, wobei der Netzwerkaufbau (1) einen Kommunikationsbus (4) zum Bereitstellen einer Kommunikation zwischen einer Logikeinheit (3) eines Basismoduls (2) des Netzwerkaufbau (1) und einem oder mehreren Erweiterungsmodulen (5), insbesondere einem oder mehreren Funktionsgeräten und/oder Kommunikationsmodulen, aufweist, und wobei das Erweiterungsmodul (5) dazu ausgebildet ist, zur Funktionserweiterung bzw. Funktionsbereitstellung des Netzwerkaufbaus (1) mit dem Kommunikationsbus (4) des Netzwerkaufbaus (1) verbunden zu werden, um wenigstens eine Zusatzfunktion eines an dem Netzwerkaufbau (1) angeschlossenen elektrischen Verbrauchers bereitzustellen.

2. Erweiterungsmodul nach Anspruch 1, wobei das Erweiterungsmodul (5) einen Leistungsteil zum Einbinden des Erweiterungsmoduls in den Stromversorgungskreislauf des wenigstens einen Verbrauchers (60) und einen Steuerungsteil mit einer Steuereinheit zum Steuern des Leistungsteils umfasst.

3. Erweiterungsmodul nach Anspruch 2, wobei der Leistungsteil einen Leistungsschalter (74) zum Ein- und Ausschalten des wenigstens einen Verbrauchers (60) umfasst.

4. Erweiterungsmodul nach Anspruch 2 oder 3, wobei der Steuerungsteil einen Steuerungsschnittstelle (77) zum Anschließen des Erweiterungsmoduls an den Kommunikationsbus (4) des Netzwerkaufbaus (1) umfasst.

5. Erweiterungsmodul nach einen der Ansprüche 1 bis 4, wobei das Erweiterungsmodul (5) eine Messvorrichtung (76) zum Erfassen wenigstens eines aktuellen Parameters des wenigstens einen elektrischen Verbrauchers (60) umfasst.

6. Erweiterungsmodul nach Anspruch 5, wobei die Messvorrichtung (76) dazu ausgebildet ist, Leistungs- und/oder Diagnostikdaten für den wenigstens einen elektrischen Verbraucher (60) zu erfassen.

7. Erweiterungsmodul nach Anspruch 5 oder 6, wobei die Messvorrichtung (76) einen Hall-Sensor und/oder einen Shunt zum Erfassen des wenigstens einen Parameters umfasst.

8. Erweiterungsmodul nach einem der vorhergehenden Ansprüche, wobei die Zusatzfunktion ein Ansteuern des wenigstens einen Verbrauchers (60) umfasst.

9. Erweiterungsmodul nach einem der vorhergehenden Ansprüche, wobei das Erweiterungsmodul (5) als ein Master-Modul zum Ansteuern von einem oder mehreren Slave-Modulen ausgebildet ist.

10. Netzwerkaufbau mit einem Basismodul (2) und mit einem Kommunikationsbus (4) zum Bereitstellen einer Kommunikation zwischen einer Logikeinheit (3) des Basismoduls (2) und einem oder mehreren Erweiterungsmodulen (5), wobei der Netzwerkaufbau (1) ein an den Kommunikationsbus (4) des Netzwerkaufbaus (1) anschließbares Erweiterungsmodul (5) nach einem der vorhergehenden Ansprüche umfasst.

11. Netzwerkaufbau nach Anspruch 10, wobei der Netzwerkaufbau (1) ferner einen Treiber (8) zum Antreiben eines elektrischen Verbrauchers (60) umfasst, und wobei das Erweiterungsmodul (5) als Treibererweiterungsmodul zum Anschließen an den Treiber (8) ausgebildet ist.

12. Leuchte, umfassend:
- ein Leuchtmittel zum Erzeugen eines Lichts,
- einen Netzwerkaufbau (1) mit einem Erweiterungsmodul (5) nach einem der vorhergehenden Ansprüche, wobei das Erweiterungsmodul (5) zum Bereitstellen einer Zusatzfunktion der Leuchte (60) ausgebildet ist.

13. Leuchte nach Anspruch 12, wobei das Erweiterungsmodul (5) eine Messvorrichtung (76) zum Erfassen wenigstens eines aktuellen elektrischen Parameters der Leuchte (60) umfasst.

14. Leuchte nach Anspruch 13, wobei die Messvorrichtung (76) dazu ausgebildet ist, Leistungs- und/oder Diagnostikdaten für die Leuchte (60) zu Erfassen.

15. Leuchte nach Anspruch 14, wobei das Erweiterungsmodul (5) als Master-Modul zum Ansteuern von einem oder mehreren Slave-Modulen ausgebildet ist.
